# EUROPÄISCHE PATENTSCHRIFT

(11) **EP 1 181 490 B1**
(45) Veröffentlichungstag und Bekanntmachung des Hinweises auf die Patenterteilung: **05.11.2003**
(21) Anmeldenummer: 99946078.5
(22) Anmeldetag: 01.09.1999
(51) Int. Cl.: F27D 3/12

(54) **BRENNGESTELL ZUM BRENNEN VON KERAMISCHEM BRENNGUT**
FIRING SUPPORT FOR FIRING CERAMIC MATERIAL
SUPPORT DE CUISSON POUR MATIERE CERAMIQUE

(30) Priorität: 26.03.1999 DE 19913838; 30.06.1999 DE 19929829
(43) Veröffentlichungstag der Anmeldung: 27.02.2002
(73) Patentinhaber: Saint-Gobain IndustrieKeramik Rödental GmbH, 96472 Rödental (DE)
(72) Erfinder: BARTHEL, Herbert, D-91575 Windsbach (DE)
(74) Vertreter: Minderop, Ralph H., Dr. rer. nat.
(86) Internationale Anmeldenummer: EP9906404
(87) Internationale Veröffentlichungsnummer: WO00058679

(56) Entgegenhaltungen:
- EP-A- 0 463 290
- DE-A- 3 425 625
- DE-A- 19 728 740
- DE-C- 464 708
- GB-A- 2 040 418
- DATABASE WPI Section Ch, Week 199626 Derwent Publications Ltd., London, GB; Class L02, AN 1996-255982 XP002131310 & JP 08 105694 A (NGK INSULATORS LTD), 23. April 1996 (1996-04-23)
- DATABASE WPI Section Ch, Week 199828 Derwent Publications Ltd., London, GB; Class L02, AN 1998-316621 XP002131311 & JP 10 114566 A (NGK INSULATORS LTD), 6. Mai 1998 (1998-05-06)

## Beschreibung

Die Erfindung betrifft ein Brenngestell zum Brennen von keramischem Brenngut, insbesondere von Dachziegeln in vertikal oder schräg stehender Anordnung, mit mehreren aus Feuerfestmaterial bestehenden Trägern und Stützelementen, wobei jeder Träger eine Mehrzahl von Ausnehmungen aufweist, in die jeweils ein Stützelement an seinem mit verringerten Querschnitt ausgebildeten Ende einsteckbar ist.

Solche Brenngestelle sind aus der DE 196 09 474 C1 und der DE 197 28 740 A1 bekannt. Das Brenngut wird darin nicht mehr flach liegend, sondern vertikal bzw. schräg stehend gebrannt. Diese Brennweise erlaubt einen energiesparenden Schnellbrand sowie ein Be- und Entladen des Brenngestells bzw. eines damit ausgerüsteten Ofenwagens mittels Robotern.

Das in der DE 197 28 740 A1 beschriebene Brenngestell besteht aus mehreren lösbaren Säulen mit variabel und paarweise an letzteren angeordneten Etagenbalken, wobei die Etagenbalken zur Halterung von zu brennende Ziegel tragenden Tragbalken eine Vielzahl von im wesentlichen vertikal gerichteten Stützen zur Beabstandung der einzelnen Ziegel aufweisen. Die Tragbalken sind dabei jeweils mit mehreren steckbar auf ihnen aufsitzenden Stützgabeln versehen, wobei in jeder Etage des Brenngestells mehrere Tragbalken nebeneinander auf jeweils zwei zueinander ausgerichteten Etagenbalken auswechselbar gehaltert sind. Zur Veränderung der Besatzdichte können die Stützgabeln in Längrichtung der Tragbalken variabel in paarweise angeordnete Nuten bzw. Bohrungen eingesteckt werden. Die Stützgabeln weisen zwar eine gute Verdrehsicherheit auf, bei Ausführung des Brenngestells in keramikgerechten Toleranzen ist die Seitenführung und die Kippsicherheit der Stützgabeln jedoch unbefriedigend. Ferner müssen die Tragbalken wegen der Nuten bzw. die Stützgabeln wegen der dreiseitigen Umfassung der Tragbalken im Schlickerguß hergestellt werden, was relativ teuer ist.

Bei dem aus der DE 196 09 474 C1 bekannten Brenngestell sind die Stützen so ausgebildet, daß daran unten jeweils ein abgewinkelter Absatz als Auflager für das Brenngut vorhanden ist. Die Stützen weisen ferner jeweils einen Fußabschnitt mit einem von dessen Unterseite vorstehenden Vorsprung auf, wobei der Fußabschnitt auf dem Tragbalken steht und mit dem Vorsprung in eine von mehreren in den Tragbalken ausgebildeten Nuten eingreift. Die Stütze ist somit relativ komplex ausgebildet und muß deshalb ebenfalls im Schlickguß hergestellt werden muß. Zudem sind die Stützen relativ groß und entsprechend schwer.

Ferner ist aus der japanischen Patentschrift JP 08-105694 A ein Brenngestell bekannt, welches einen Träger mit Stützelementen aufweist, wobei die Einsteckenden und der obere Teil der Stützelemente einen sich verjüngenden Querschnitt aufweisen. Die Stützelemente können daher wiederum nur im Schlickguß hergestellt werden, sodass die Herstellkosten ebenfalls relativ hoch sind.

Aufgabe der vorliegenden Erfindung ist es, ein Brenngestell der eingangs genannten Art zu schaffen, das sich durch besonders stabile Steckverbindungen bei vergleichsweise geringen Herstellungskosten auszeichnet.

Diese Aufgabe wird erfindungsgemäß dadurch gelöst, daß die Stützelemente durch Strangpreßprofile mit lediglich am Einsteckende durch maschinelle Bearbeitung reduzierter Querschnittsabmessung gebildet sind, wobei das Einsteckende genau in die zugeordneten Ausnehmungen paßt.

Die Verwendung von Strangpreßprofilen, bei denen es sich vorzugsweise um standardisierte Strangpreßprofile handelt, ermöglicht eine kostengünstige Herstellung eines gattungsgemäßen Brenngestells, wobei durch die hohe Paßgenauigkeit und die engen Toleranzen aller wesentlichen Teile des Stecksystems eine besonders hohe Stabilität und Kippsicherheit der Steckverbindungen erzielt wird.

Eine vorteilhafte Ausgestaltung des erfindungsgemäßen Brenngestells besteht darin, daß die Strangpreßprofile Hohlprofile oder mit in Längsrichtung verlaufenden Ausnehmungen versehene Vollprofile, beispielsweise U-förmige oder V-förmige Vollprofile sind. Hierdurch läßt sich das Gewicht des Brenngestells erheblich verringern und somit dessen Handhabung erleichtern.

Je nach Beschaffenheit des zu brennenden Brenngutes können die Stützelemente aus Strangpreßhohlprofilen mit insbesondere zylindrischem oder rechteckigem Querschnitt bestehen. Kreiszylindrische Rohrprofile haben den Vorteil geringen Gewichts, bieten dem Brenngut aber nur eine lineare Anlagefläche. Stützelemente mit nicht kreiszylindrischem Querschnitt, insbesondere rechteckigem Querschnitt bieten breite Anlageflächen, müssen jedoch in der Regel verdrehsicher an dem jeweiligen Träger fixiert werden. Besonders bevorzugt ist die Verwendung von Stützelementen aus dreieckigen Hohlprofilen. Derartige Stützelemente bieten das günstigste Verhältnis von Breite der Anlagefläche zu Gewicht des Stützelements. Eine weitere Gewichtsreduzierung läßt sich realisieren, wenn die Stützelemente aus im wesentlichen V-förmigen Profilen bestehen.

Um auf einfache Weise eine Verdrehsicherung für die Stützelemente zu schaffen, können nach einer bevorzugten Ausgestaltung des erfindungsgemäßen Brenngestells die Träger, gegebenenfalls die Querträger und/oder gegebenenfalls die Auflagen mindestens eine Ausfräsung aufweisen, die ein Stützelement gegen Verdrehung sichert.

Zur Sicherung einer Auflage gegen Verdrehung kann die Auflage gemäß einer bevorzugten Ausgestaltung formschlüssig mit dem Träger verbunden sein.

Eine andere vorteilhafte Ausgestaltung des erfindungsgemäßen Brenngestells besteht darin, daß mindestens zwei Träger durch Querträger miteinander verbunden sind, wobei die Querträger Ausnehmungen aufweisen, in die jeweils das Einsteckende eines Stützelements einsteckbar ist. Hierdurch kann zum einen die Stabilität des Brenngestells weiter verbessert werden, wobei zur Gewichtseinsparung die Anzahl der Träger entsprechend der Länge der Querträger und der Belastung der verbleibenden Träger verringert werden kann, und zwar auf minimal zwei Träger. Zum anderen können die Querträger als Auflager für das Brenngut dienen, wobei aufgrund der dabei durchgehenden Auflagerfläche eine besonders sichere Lagerung des Brenngutes im Brenngestell erzielt wird.

Eine weitere vorteilhafte Ausgestaltung des erfindungsgemäßen Brenngestells besteht darin, daß das Einsteckende sowie die Ausnehmungen zum Einstecken der Stützelemente jeweils konisch ausgebildet sind. Gegenüber gerade ausgebildeten Einsteckenden bzw. Ausnehmungen zeichnet sich diese Ausgestaltung durch eine erhöhte Stabilität der Steckverbindungen aus.

Nach einer weiteren bevorzugten Ausgestaltung können die Träger Ausnehmungen aufweisen, in welchen die Querträger formschlüssig einsetzbar sind. Auch diese Ausgestaltung trägt zur Erhöhung der Stabilität des Brenngestells bei.

Weitere bevorzugte und vorteilhafte Ausgestaltungen der Erfindung sind in den Unteransprüchen angegeben.

Das erfindungsgemäße Brenngestell wird nachfolgend anhand einer mehrere Ausführungsbeispiele darstellenden Zeichnung näher erläutert. Im einzelnen zeigen:
- Fig. 1: eine Vorderansicht auf ein teilweise geschnitten dargestelltes Brenngestell,
- Fig. 2: eine Seitenansicht auf ein teilweise geschnitten dargestelltes Brenngestell mit schräg angeordneten Stützelementen,
- Fig. 3: eine Seitenansicht auf ein teilweise geschnitten dargestelltes Brenngestell mit einem eine Ausfräsung aufweisenden Träger zur Sicherung einer Brenngutauflage gegen Verdrehung in bezug auf den Träger,
- Figuren 4 bis 7: Querschnittansichten von vier verschiedenen Stützelementen, und
- Figuren 5 bis 10: Querschnittansichten von drei verschiedenen Trägern mit daran verdrehsicher angeordneten Auflagen.

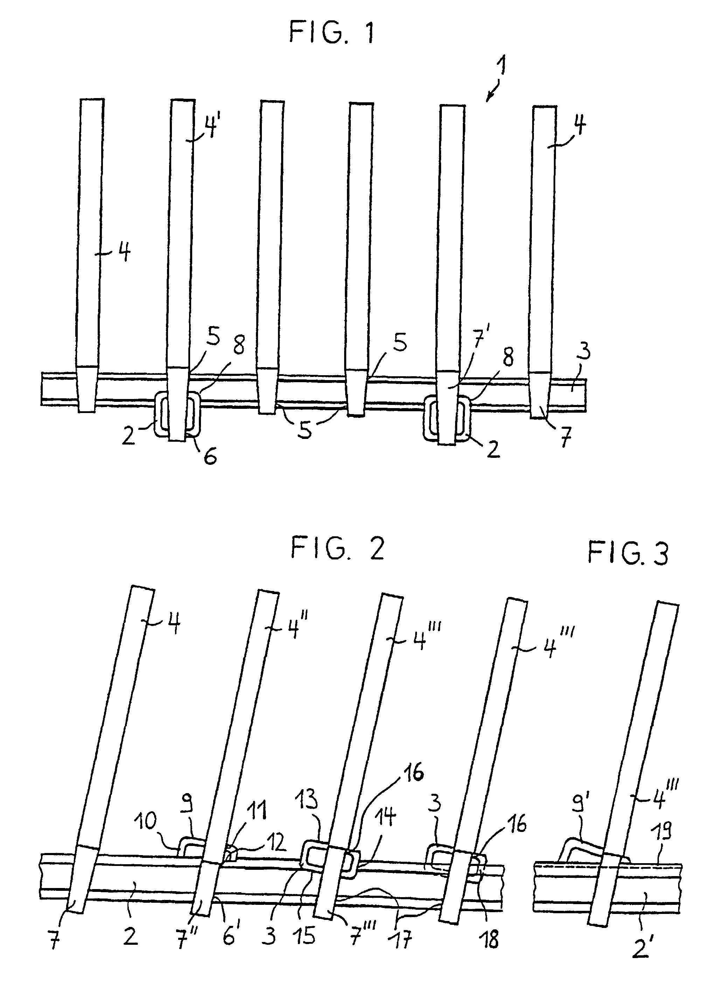

Das in Fig. 1 schematisch dargestellte Brenngestell 1 ist insbesondere zum Brennen von Dachziegeln bestimmt, die in dem Gestell 1 vertikal oder schräg stehend, zueinander beabstandet angeordnet werden. Das Brenngestell 1 kann auf einem nicht näher dargestellten Brennwagen angeordnet sein, der durch einen Brennofen verfahrbar ist. Es ist in dem dargestellten Ausführungsbeispiel aus Trägern 2, Querträgern 3 und Stützelementen 4,4^{I} aufgebaut, die jeweils aus feuerfestem Material bestehen. In den im wesentlichen horizontal angeordneten Trägern 2 sowie den Querträgern 3 ist eine Mehrzahl von Ausnehmungen 5,6 ausgebildet, in die die Stützelemente 4,4^{I} variabel einsteckbar sind. Die maximale Länge der Querträger 3 richtet sich nach der zulässigen Scherspannung an den Stützelementen 4,4^{I}.

Die Träger 2, Querträger 3 und Stützelemente 4,4^{I} sind erfindungsgemäß jeweils aus standardisierten Strangpreßprofilen und maschinelles Bearbeiten der Profile durch Schneiden, Fräsen, Drehen bzw. Bohren paßgenau mit engen Toleranzen hergestellt. Es ist zu erkennen, daß die Einsteckenden 7,7^{I} der Stützelemente 4,4^{I} sowie die zugeordneten Ausnehmungen 5,6 in den Trägern 2 bzw. Querträgern 3 konisch ausgebildet sind. Das konische Einsteckende 7,7^{I} eines Stützelementes 4,4^{I} ist durch entsprechendes Abdrehen des beispielsweise einen kreiszylindrischen Querschnitt aufweisenden Stützelementes 4,4^{I} hergestellt, wohingegen die konischen Ausnehmungen 5,6 in den Trägern 2 und Querträgern 3 durch Bohren hergestellt sind. Die Mittelachsen der Bohrungen 5,6 können dabei vertikal oder schräg in den Trägern 2 bzw. Querträgern 3 verlaufen. Die einen im wesentlichen rechteckigen Querschnitt aufweisenden Querträger 3 sind mit Ausklinkungen 8 versehen, in die die ebenfalls einen im wesentlichen rechteckigen Querschnitt aufweisenden Träger 2 formschlüssig und paßgenau eingreifen. Die an der jeweiligen Verbindungsstelle von Träger 2 und Querträger 3 angeordneten Stützelemente 4^{I} sind länger als die übrigen Stützelemente 4, wobei das Einsteckende 7,7^{I} jedes Stützelementes 4,4^{I} aus der zugeordneten Ausnehmung 5,6 im Träger 2 bzw. Querträger 3 herausragt.

Fig. 2 zeigt einen einen rechteckigen Querschnitt aufweisenden Träger 2, an dem verschiedene Steckverbindungen zur lösbaren Befestigung von Stützelementen 4,4^{II},4^{III} dargestellt sind.

Die äußerst links dargestellte Steckverbindung entspricht weitgehend der in Fig. 1 dargestellten Steckverbindung; allerdings ist bei dieser Steckverbindung im Gegensatz zu der in Fig. 1 gezeigten kein Querträger vorhanden. Die konisch ausgebildete Bohrung 6 ist im Träger 2 schräg angeordnet, so daß sich eine entsprechende Schräglage für das Stützelement 4 bzw. das dadurch abgestützte Brenngut ergibt.

Die von links aus gesehen an zweiter Stelle dargestellte Steckverbindung unterscheidet sich von der vorherigen Steckverbindung dadurch, daß dem Stützelement 4^{II} eine separate Auflage 9 zugeordnet ist. Die Auflage 9 ist aus einem stranggepreßten U-Profil aus feuerfestem Material hergestellt, wobei der Seitensteg 10 des U-Profils auf der das Brenngut (nicht gezeigt) aufnehmenden Seite länger als derjenige auf der gegenüberliegenden Seite ist. Die Länge der Auflage 9 hängt von der Beschaffenheit des Brenngutes ab. Ist eine möglichst große Auflage- bzw. Abstützfläche für das Brenngut erforderlich, so kann die Auflage 9 gegebenenfalls zwei oder mehrere Träger überbrücken. Die Auflage 9 weist zur Verbindung mit dem Stützelement 4^{II} eine gebohrte oder ausgefrästen Ausnehmung 11 auf, wobei die Auflage 9 auch der Sicherung des Stützelementes 4^{II} gegen Verdrehung in bezug auf den Träger 2 dient. Hierzu ist in dem Träger 2 eine Nut 12 ausgefräst, in welche der kürzere Schenkel der U-förmigen Auflage 9 formschlüssig eingreift. Ferner kann die Ausnehmung 11 der Auflage 9 dem vorzugsweise nicht kreiszylindrischen Querschnittsprofil des Stützelementes 4^{II} angepaßt sein, so daß das Stützelement 4^{II} über die Auflage 9 verdrehsicher mit dem Träger 2 verbunden ist.

Das Einsteckende 7^{II} des Stützelementes 4^{II} und die Ausnehmung 6^{I} im Träger 2 sind bei diesem Ausführungsbeispiel jeweils kreiszylindrisch ausgeführt.

Die von links aus gesehen an dritter Stelle dargestellte Steckverbindung umfaßt einen im Querschnitt im wesentlichen rechteckigen Querträger 3, der mit schräg stehender Anlagefläche 13 in eine Ausfräsung 14 im Träger 2 eingesetzt ist. Der Träger 2 weist dementsprechend schräg verlaufende Anlageflächen 15 in seinen Seitenwänden auf. Der Querträger 3 trägt eine Mehrzahl von Stützelementen 4^{III}, von denen eines mit seinem kreiszylindrischen Einsteckende 7^{III} in eine entsprechende Bohrung 16 im Querträger 3 sowie eine damit fluchtende, schräg angeordnete Bohrung 17 im Träger 2 eingesteckt ist. Es ist zu erkennen, daß das durch Abdrehen hergestellte Einsteckende 7^{III} bis etwa zur Anlagefläche 13 des Querträgers 3 reicht.

Die von links aus gesehen an vierter Stelle dargestellte Steckverbindung unterscheidet sich von der vorherigen dadurch, daß anstelle einer Ausfräsung 14 im Träger 2 eine Ausklinkung 18 im Querträger 3 vorhanden ist, in die der Träger 2 mit seiner Oberseite formschlüssig und paßgenau eingreift. Das Stützelement 4^{III} und die gebohrten Ausnehmungen 16,17 sind wiederum schräg angeordnet.

Fig. 3 zeigt einen Profilträger 2^{I}, dessen Querschnitt im wesentlichen rechteckförmig ist, wobei an der Oberseite eine Nut 19 ausgebildet ist, in welche eine mit dem Stützelement 4^{III} verbindbare, das Brenngut tragende Auflage 9^{I} verdrehsicher eingreift.

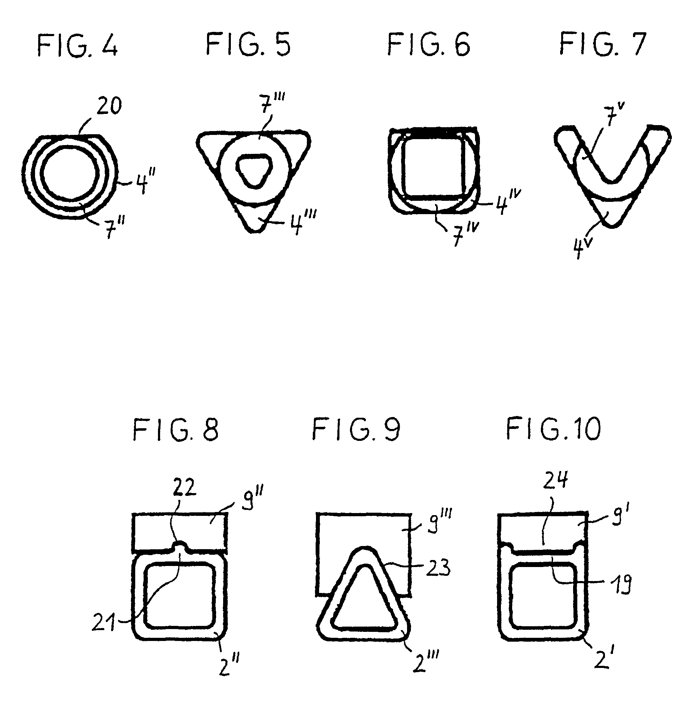

In den Figuren 4 bis 7 sind verschiedene Querschnittsprofile von Stützelementen dargestellt. Fig. 4 zeigt ein Stützelement 4^{II}, das aus einem kreiszylindrischen Strangpreßhohlprofil hergestellt ist, wobei das Einsteckende 7^{II} einen durch Abdrehen reduzierten Außendurchmesser aufweist. Ferner ist das Stützelement 4^{II} zur Vergrößerung der Anlagefläche für das Brenngut mit einer in Längsrichtung verlaufenden Abflachung 20 versehen, die beispielsweise durch Fräsen hergestellt ist. Diese Abflachung 20 kann mit einem geraden Ausschnitt korrespondieren, der in der Ausnehmung bzw. Bohrung ausgebildet ist, welche in dem Träger 2, dem Querträger 3 oder der Auflage 9,9^{I} angeordnet ist.

Das in Fig. 5 gezeigte Stützelement 4^{III} besteht aus einem Strangpreßhohlprofil mit einem im wesentlichen dreieckigen Querschnitt. Das Einsteckende 7^{III} des Stützelements 4^{III} weist dagegen einen zylindrischen Querschnitt auf und wurde durch entsprechendes Abdrehen des dreieckigen Stützelements 4^{III} hergestellt.

Fig. 6 zeigt ein aus einem im wesentlichen rechteckigen Strangpreßhohlprofil hergestelltes Stützelement 4^{IV}. Das Einsteckende 7^{IV} des Stützelements 4^{IV} hat wiederum einen zylindrischen Querschnitt auf und wurde durch entsprechendes Abdrehen des Stützelements 4^{IV} hergestellt. Zur Gewichtseinsparung kann bei Bedarf auch eine Längsseite des Stützelements 4^{IV} entfallen, so daß dieses dann ein im wesentlichen U-förmiges Querschnittsprofil auf weist.

Die in Fig. 7 dargestellte Ausführungsform zeigt ein Stützelement 4^{V}, das aus einem einen im wesentlichen V-förmigen Querschnitt aufweisenden Strangpreßprofil hergestellt ist. Das Einsteckende 7^{V} hat eine kreisbogenförmige Außenkontur und wurde durch Abfräsen oder Abdrehen des Stützelementes 4^{V} hergestellt.

Es ist ersichtlich, daß die in den Figuren 4 bis 7 dargestellten Stützelemente jeweils verdrehsicher mit dem Träger, dem Querträger oder der Auflage verbindbar sind, indem die darin ausgebildeten Einsteckausnehmungen 5^{I},6^{I},11 entsprechend ausgefräste Anlageflächen aufweisen (vgl. Fig. 2).

In den Figuren 8 bis 10 sind verschiedene Träger 2^{I},2^{II},2^{III} mit unterschiedlichen Querschnittsprofilen gezeigt, die eine formschlüssige und damit verdrehsichere Verbindung von als Auflager für das Brenngut dienenden Auflagen 9^{I},9^{II},9^{III} ermöglichen. Der in Fig. 8 gezeigte Träger 2^{II} hat ein im wesentlichen quadratisches Querschnittsprofil, an dessen Oberseite ein sich in Längsrichtung erstreckender Steg 21 ausgebildet ist. Dementsprechend weist die Auflage 9^{I} an ihrer Unterseite eine mit dem Steg 21 zusammenwirkende Nut 22 auf.

Fig. 9 zeigt einen Träger 2^{III} mit einem im wesentlichen dreieckigen Querschnittsprofil. Die darauf sitzende Auflage 9^{III} hat dementsprechend eine im Querschnitt V-förmige Nut 23.

Der in Fig. 10 dargestellte Träger 2^{I} hat wiederum ein im wesentlichen quadratisches Querschnittsprofil. An seiner Oberseite ist eine relativ breite, sich in Längsrichtung erstreckende Nut 19 ausgebildet, in die ein entsprechend ausgebildeter Steg 24 einer Auflage 9^{I} eingreift.

Die jeweilige Nut in dem Träger 2' oder der Auflage 9^{II},9^{III} kann bereits beim Strangpressen des Trägers bzw. der Auflage oder anschließend durch Fräsen hergestellt werden.

Das erfindungsgemäße Brenngestell zeichnet sich zusammenfassend insbesondere durch folgende Vorteile aus:
- Das Brenngestell besteht aus nur wenigen Systemteilen, die kostengünstig und paßgenau durch Strangpressen und anschließendes einfaches maschinelles Bearbeiten hergestellt werden können.
- Das. Brenngestell hat eine hohe Stabilität, die auf den engen Toleranzen der Systemteile, insbesondere den engen Toleranzen der Bohrungen und Ausfräsungen beruht.
- Das System ist variabel und kann durch verschieden geformte Auflagen den Konturen unterschiedlichen Brenngutes angepaßt werden. Die Vielzahl der im Träger und gegebenenfalls im Querträger ausgebildeten Ausnehmungen bzw. Bohrungen ermöglicht eine variable Besatzdichte für unterschiedliches Brenngut. Durch Einfügen von Querträgern zur Aufnahme von zusätzlichen Stützelementen lassen sich Brenngestelle auch für relatives schmales Brenngut, z.B. für Biberschwanzdachziegel bilden.
- Insbesondere bei Verwendung von Stützelementen mit dreieckigem oder V-förmigem Querschnitt ergibt sich eine erhebliche Gewichtseinsparung gegenüber den aus der DE 196 09 474 C1 und der DE 197 28 740 A1 bekannten herkömmlichen schlickergegossenen Stützelementen, was sich bei mehr als 1000 Stützelementen zu einer Gewichtseinsparung von mindestens 500 kg pro Ofenwagen summiert.
- Der dreieckige Stützenquerschnitt bietet bei geringstem Gewicht die größtmögliche Anlegefläche für das Brenngut und eine gute Verdrehsicherheit zwischen Stützelement und Ausfräsung.

## Patentansprüche

1. Brenngestell zum Brennen von keramischem Brenngut, insbesondere von Dachziegeln in vertikal oder schräg stehender Anordnung, mit mehreren aus Feuerfestmaterial bestehenden Trägern (2, 3) und Stützelementen (4), wobei jeder Träger (2, 3) eine Mehrzahl von Ausnehmungen (5,6) aufweist, in die jeweils ein Stützelement (4) an seinem mit verringertem Querschnitt ausgebildeten Ende (7) einsteckbar ist,
**dadurch gekennzeichnet, daß** die Stützelemente (4) durch Strangpreßprofile mit lediglich am durch maschinelle Einsteckende (7) Bearbeitung reduzierter Querschnittsabmessung gebildet sind, wobei das Einsteckende (7) genau in die zugeordneten Ausnehmungen (5, 6) paßt.

2. Brenngestell nach Anspruch 1,
**dadurch gekennzeichnet, daß** die Strangpreßprofile Hohlprofile oder mit in Längsrichtung verlaufenden Ausnehmungen versehene Vollprofile sind.

3. Brenngestell nach Anspruch 1 oder 2,
**dadurch gekennzeichnet, daß** mindestens zwei Träger (2) durch Querträger (3) miteinander verbunden sind.

4. Brenngestell nach Anspruch 3,
**dadurch gekennzeichnet, daß** die Querträger (3) Ausnehmungen (5) aufweisen, in die jeweils das Einsteckende (7) eines Stützelements (4) einsteckbar ist.

5. Brenngestell nach einem der Ansprüche 1 bis 4,
**dadurch gekennzeichnet, daß** zumindest ein Teil der Stützelemente (4) jeweils mit einer dem Brenngut als Auflager dienenden Auflage (9) versehen ist.

6. Brenngestell nach Anspruch 5,
**dadurch gekennzeichnet, daß** die Auflage (9) eine Ausnehmung (5) aufweist, in die das Einsteckende eines Stützelements (4) einsteckbar ist.

7. Brenngestell nach einem der Ansprüche 1 bis 6,
**dadurch gekennzeichnet, daß** die Träger (2), die Querträger (3) und/oder gegebenenfalls die Auflagen (9) aus Strangpreßprofilen bestehen.

8. Brenngestell nach einem der Ansprüche 1 bis 7,
**dadurch gekennzeichnet, daß** das Einsteckende (7) sowie die Ausnehmungen (5,6) zum Einstecken der Stützelemente (4) jeweils konisch ausgebildet sind.

9. Brenngestell nach einem der Ansprüche 3 bis 8,
**dadurch gekennzeichnet, daß** die Träger (2) Ausnehmungen (14) aufweisen, in welchen die Querträger (3) formschlüssig einsetzbar sind.

10. Brenngestell nach einem der Ansprüche 1 bis 9,
**dadurch gekennzeichnet, daß** die Träger (2), gegebenenfalls die Querträger (3) und/oder gegebenenfalls die Auflagen (9) mindestens eine Ausfräsung (12,19) aufweisen, die ein Stützelement (4) gegen Verdrehung sichert.

11. Brenngestell nach einem der Ansprüche 5 bis 10,
**dadurch gekennzeichnet, daß** die Auflage (9) formschlüssig mit einem Träger (2) verbunden ist, so daß die Auflage (9) in bezug auf den Träger (2) gegen Verdrehung gesichert ist.

12. Brenngestell nach einem der Ansprüche 1 bis 10,
**dadurch gekennzeichnet, daß** die Strangpreßprofile standardisierte Strangpreßprofile sind.

## Claims

1. Firing support for firing ceramic material, in particular for roofing tiles in a vertical or diagonal arrangement, with several supports (2, 3) and supporting elements (4) made of refractory material, wherein each support (2, 3) features a number of recesses (5, 6), into each of which a supporting element (4) can be inserted at the end (7), which is shaped with a reduced cross-section,
**characterized in that** the supporting elements (4) are formed by extruded profiles having insertable ends (7) with cross-sectional dimensions reduced only by machining processes, wherein the insertable end (7) fits exactly in the corresponding recesses (5, 6).

2. Firing support according to Claim 1,
**characterized in that** the extruded profiles comprise hollow profiles or are provided with full profiles with recesses extending in a longitudinal direction.

3. Firing support according to Claims 1 or 2,
**characterized in that** at least two supports (2) are connected together by transverse supports (3).

4. Firing support according to Claim 3,
**characterized in that** the transverse supports (3) feature recesses (5), into which the insertable end (7) of a corresponding supporting element (4) can be inserted.

5. Firing support according to one of Claims 1 to 4,
**characterized in that** at least one part of the supporting elements (4) is provided with a carrier (9) as a carrier for the object being fired.

6. Firing support according to Claim 5,
**characterized in that** the carrier (9) features a recess (5) into which the insertable end of a supporting element (4) can be inserted.

7. Firing support according to one of Claims 1 to 6,
**characterized in that** the supports (2), the transverse supports (3) and/or if necessary the carriers (9) consist of extruded profiles.

8. Firing support according to one of Claims 1 to 7,
**characterized in that** the insertable end (7) and the recesses (5, 6) for the insertion of the supporting elements (4) are each conically formed .

9. Firing support according to one of Claims 3 to 8,
**characterized in that** the supports (2) feature recesses (14), into which the transverse supports (3) can be inserted with a positive fit.

10. Firing support according to one of Claims 1 to 9,
**characterized in that** the supports (2), if necessary the transverse supports (3), and / or if necessary the carriers (9) feature at least one milled recess (12, 19) to prevent a supporting element (4) from rotating.

11. Firing support according to one of the Claims 5 to 10,
**characterized in that** the carrier (9) is connected with a support (2) with a positive fit, so that the carrier (9) is prevented from rotating with respect to the support (2).

12. Firing support according to one of the Claims 1 to 10,
**characterized in that** the extruded profiles are standard extruded profiles.

## Revendications

1. Support de cuisson pour faire cuire des produits à cuire et en particulier des tuiles à disposition verticale ou inclinée, avec plusieurs porteurs (2, 3) constitués de matière réfractaire et éléments de soutien (4), chaque porteur (2, 3) présentant une multitude d'évidements (5, 6), dans lesquels à chaque fois un élément de soutien (4) peut être emboîté par son extrémité (7) qui est conçue avec une section transversale réduite,
**caractérisé en ce que** les éléments de soutien (4) sont réalisés par des profilés extrudés avec une dimension de section transversale réduite uniquement sur l'extrémité d'emboîtement par usinage mécanique, l'extrémité d'emboîtement (7) allant exactement dans les évidements (5, 6) associés.

2. Support de cuisson selon la revendication 1,
**caractérisé en ce que** les profilés extrudés sont des profilés creux ou des profilés pleins pourvus d'évidements s'étendant dans le sens longitudinal.

3. Support de cuisson selon la revendication 1 ou 2,
**caractérisé en ce qu'**au moins deux porteurs (2) sont reliés entre eux par des traverses (3).

4. Support de cuisson selon la revendication 3,
**caractérisé en ce que** les traverses (3) présentent des évidements (5) dans chacun desquels peut s'emboîter l'extrémité d'emboîtement (7) d'un élément de soutien (4).

5. Support de cuisson selon l'une quelconque des revendications 1 à 4,
**caractérisé en ce qu'**au moins une partie des éléments de soutien (4) est pourvue respectivement d'un appui (9) servant d'appui pour le produit à cuire.

6. Support de cuisson selon la revendication 5,
**caractérisé en ce que** le l'appui(9) présente un évidement (5), dans lequel peut s'emboîter l'extrémité d'emboîtement d'un élément de soutien (4).

7. Support de cuisson selon l'une quelconque des revendications 1 à 6,
**caractérisé en ce que** les porteurs (2),les traverses (3) et/ou éventuellement les appuis (9) sont constitués de profilés extrudés.

8. Support de cuisson selon l'une quelconque des revendications 1 à 7,
**caractérisé en ce que** l'extrémité d'emboîtement (7) et les évidements (5, 6) sont conçus à chaque fois avec une forme conique pour l'emboîtement des éléments de soutien (4).

9. Support de cuisson selon l'une quelconque des revendications 3 à 8,
**caractérisé en ce que** les porteurs (2) présentent des évidements (14), dans lesquels les traverses (3) peuvent être insérées par conjugaison de forme.

10. Support de cuisson selon l'une quelconque des revendications 1 à 9,
**caractérisé en ce que** les porteurs (2), éventuellement les traverses (3) et/ou éventuellement les appuis (9) présentent au moins un fraisage (12, 19) qui bloque un élément de soutien (4) contre la rotation.

11. Support de cuisson selon l'une quelconque des revendications 5 à 10,
**caractérisé en ce que** l'appui (9) est relié par conjugaison de forme à un porteur (2), de sorte que l'appui (9) est bloqué contre la rotation, par rapport au porteur(2).

12. Support de cuisson selon l'une quelconque des revendications 1 à 10,
**caractérisé en ce que** les profilés extrudés sont des profilés extrudés standardisés.
